(19) Europäisches Patentamt / European Patent Office / Office européen des brevets

(11) **EP 3 383 643 B1**

(12) **FASCICULE DE BREVET EUROPEEN**

(45) Date de publication et mention de la délivrance du brevet:
**21.04.2021 Bulletin 2021/16**

(21) Numéro de dépôt: **16819352.2**

(22) Date de dépôt: **02.12.2016**

(51) Int Cl.:
*B65D 81/00* (2006.01)   *F16L 59/00* (2006.01)
*B32B 15/01* (2006.01)   *F02B 77/11* (2006.01)
*B32B 7/08* (2019.01)   *B32B 15/18* (2006.01)
*B32B 1/02* (2006.01)   *B32B 5/18* (2006.01)
*B23K 13/06* (2006.01)   *B23K 10/02* (2006.01)
*B23K 13/02* (2006.01)   *B23K 11/06* (2006.01)
*F16L 59/02* (2006.01)   *B23K 20/02* (2006.01)
*B23K 11/16* (2006.01)   *B23K 103/04* (2006.01)
*B23K 31/02* (2006.01)   *B23K 20/233* (2006.01)
*B23K 101/12* (2006.01)   *B23K 20/26* (2006.01)
*B32B 15/04* (2006.01)

(86) Numéro de dépôt international:
**PCT/FR2016/053188**

(87) Numéro de publication internationale:
**WO 2017/093691 (08.06.2017 Gazette 2017/23)**

(54) **PIECE ISOLANTE METALLIQUE TRIDIMENSIONNELLE**

DREIDIMENSIONALES METALLISCHES TEIL ZUM ISOLIEREN

THREE DIMENSIONAL METALLIC PIECE FOR ISOLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2015 FR 1561727**

(43) Date de publication de la demande:
**10.10.2018 Bulletin 2018/41**

(73) Titulaire: **Hutchinson**
**75008 Paris (FR)**

(72) Inventeurs:
• **CHOPARD, Fabrice**
**38400 Saint Martin D'heres (FR)**
• **LEBORGNE, Mathieu**
**74500 Evian Les Bains (FR)**
• **HUILLET, Cédric**
**45200 Montargis (FR)**
• **PATILLAUT, Thomas**
**45220 Melleroy (FR)**
• **BOURASS, Hmad**
**45200 Amilly (FR)**
• **FAVIER, Yann**
**69380 Dommartin (FR)**
• **DOMINIAK, Christophe**
**45290 Varennes Changy (FR)**

(74) Mandataire: **Ernest Gutmann - Yves Plasseraud S.A.S.**
**66, rue de la Chaussée d'Antin**
**75009 Paris (FR)**

(56) Documents cités:
EP-A1- 0 717 949    EP-A1- 2 345 770
WO-A1-2014/156703    WO-A1-2015/008533
WO-A1-2015/121540    WO-A2-2009/087172
DE-A1-102011 002 248    JP-A- H01 150 098
JP-A- 2006 275 186    JP-A- 2014 163 494
JP-B2- 5 377 763    JP-U- 3 149 358

**Description**

La présente invention concerne le domaine de la gestion thermique.

Est concernée en particulier une pièce isolante sous atmosphère contrôlée (notamment pièce isolée sous vide ; PIV ou VIP en anglais : vacuum insulated panel) et son procédé de fabrication.

Des publications de brevets, tels US 9157230, ont déjà traité de ces sujets. Un problème demeure toutefois en liaison avec la tenue dans le temps du panneau, donc sa fiabilité et son efficacité dans la gestion thermique de l'environnement où il est placé, cela d'autant plus si cet environnement est soumis à des normes sévères, comme dans les domaines naval ou automobile.

Sans spécifiquement cité les domaines d'applications critiques, US 9157230 propose un panneau PIV prévu pour diminuer la fuite de chaleur vis-à-vis d'une structure face à laquelle le panneau sera disposé.

EP 2 345 770 A1, JP 2006 275186 A, WO 2009/087172 A2 et EP 0 717 949 A1 divulguent des pièces isolantes thermiques.

Mais le procédé de fabrication décrit impose une mise en œuvre contraignante qui ne se justifie pas aux yeux des inventeurs en ce qu'il ne permet pas, selon leur opinion, de garantir une longévité décennale ou multi-décennale au panneau, dans des conditions opérationnelles satisfaisantes.

Un aspect de l'invention vise à traiter ce problème, qui devient critique quand un défaut de qualité de gestion thermique n'est pas acceptable pendant des années, dans un environnement difficile : contraintes thermiques importantes autour d'un moteur, risques d'agressions chimiques, voire mécaniques lors d'une maintenance, cycles successifs des contraintes thermiques appliquées, dans un environnement vibratoire parfois sévère.

Il existe par ailleurs des procédés de réalisation de pièces présentant des parois respectivement intérieure au moins localement concave et extérieure au moins localement convexe, ces procédés prévoyant :

- d'utiliser au moins une première et une seconde plaques métalliques,
- et de former en creux en particulier l'une de ces plaques métalliques pour constituer une partie au moins de la paroi intérieure ou extérieure de la pièce finie ou d'une ébauche de celle-ci.

Il n'est, à la connaissance des inventeurs, toutefois pas prévu à ce jour d'en faire des pièces d'isolation thermique sous atmosphère contrôlée en pression et/ou en composition.

De fait, il est ici considéré qu'un obstacle est constitué par la manière de réaliser de telles pièces, en particulier si elles ont vocation à intégrer une enveloppe en dépression censée durer une décennie et davantage dans un environnement industriel (monde automobile, domaine naval...).

Aussi est-il ici proposé un procédé de réalisation qui comprend les étapes qui suivent :

- former en creux la première plaque métallique pour constituer une partie au moins de la paroi intérieure de la pièce finie ou d'une ébauche de celle-ci,
- former en creux la seconde plaque métallique pour constituer une partie au moins de la paroi extérieure de la pièce finie ou d'une ébauche de celle-ci,

avec comme autres spécificités que :

- le formage en creux de la première plaque métallique est intérieurement au moins localement concave (et extérieurement au moins localement convexe) pour constituer une partie au moins de ladite paroi intérieure,
- le formage en creux de la seconde plaque métallique est extérieurement au moins localement convexe (et intérieurement au moins localement concave) pour constituer une partie au moins de ladite paroi extérieure,
- où le creux de la première plaque métallique est placé dans le creux de la seconde plaque, pour définir une cuvette à double paroi,
- lors des formages, on adapte les formes des première et seconde plaques métalliques de sorte qu'elles puissent être mises en contact l'une de l'autre, périphériquement, tout en réservant alors entre elles un espace, à l'intérieur de cette périphérie,
- puis on met en place les première et seconde plaques métalliques de préférence dans une chambre à dépression et/ou à atmosphère contrôlée, où elles sont rapprochées l'une de l'autre, soudées entre elles, périphériquement, de sorte qu'est créée entre elles, à l'endroit dudit espace, une enceinte en dépression et/ou sous atmosphère contrôlée.

Il s'en suit qu'une partie au moins du soudage précité aura pu être réalisé hors de la chambre à dépression et/ou à atmosphère contrôlée.

Dans la présente demande :

- « dépression » a pour sens pression inférieure à la pression ambiante (donc < $10^5$Pa). Une pression entre 10°Pa et 10 $^4$Pa dans l'enceinte pourra en particulier convenir ;
- « atmosphère contrôlée » a pour sens remplie par un gaz ayant une conductivité thermique inférieure à celle de l'air ambiant (26mW/m.K),
- « soudage » exclut tout brasage, conformément au sens reconnu dans la technique. Dans les soudages ici prévus, il n'y a pas de matériau d'apport et/ou pas de fusion des bords assemblés. Dans le texte ci-après, les scellements seront des soudages. Le soudage sera continu (il n'est donc pas de type points par points, « spot welding » en anglais).

Des plaques métalliques d'épaisseur(s) inférieures ou égales à 3mm, et typiquement des épaisseurs comprises entre 0,07 et 3 mm, notamment avec des matériaux choisis dans le groupe comprenant l'acier inoxydable, l'aluminium et d'autres métaux à conductivité thermique inférieure à 300 W/m.K, permettront :

- de confondre les conductivités thermiques globale de la pièce et intrinsèque des plaques, car la diffusion thermique et les pertes thermiques seront alors faibles,
- et de satisfaire à des exigences de tenue mécanique comparables à celles de carters d'huile à paroi pleine en aluminium d'épaisseur 7mm.

Dans le présent document, toute conductivité thermique est considérée comme estimée à 20°C et dans un environnement à pression atmosphérique.

Pour favoriser l'efficacité de l'isolation, voire la tenue mécanique, il est proposé que, préalablement à l'étape de réalisation de l'enceinte en dépression et/ou sous atmosphère contrôlée, on enferme un matériau cœur ou un écran thermo-réflecteur entre les deux plaques métalliques.

Dans le cas d'un matériau cœur, et d'autant plus s'il est censé constituer un élément structurant de soutien des plaques face à la dépression régnant dans l'enceinte, avant de sceller entre elles les plaques mises en forme, on moulera ce matériau cœur sensiblement aux formes des parois intérieure et extérieure de ces première et seconde plaques, respectivement.

Réalisé dans une chambre qui est en dépression par rapport au milieu extérieur ou est sous atmosphère contrôlée, le soudage présentera favorablement un taux de fuite inférieur à $10^{-6}$Pa.m$^3$/s, après un premier traitement thermique selon la norme RTCA-DO 160-G section 5 Cat A (de -55°C à 400°C) et un second traitement thermique à -196°C pendant 1 heure.

Ci-dessus, on aura noté que, par rapport à la norme RTCA-DO 160-G section 5 Cat A, la température maximale du test a été ramenée de 550°C à 400°C.

Et, favorablement, les taux de fuite à l'endroit de la soudure devront être identiques (à 20% près) avant l'application du test selon la norme et après.

Pour favoriser l'obtention d'un tel taux de fuite inférieur à $10^{-6}$ Pa.m$^3$/s, il est par ailleurs proposé qu'à l'endroit du scellement l'une au moins de ces plaques métalliques :

- présente au moins un pliage, tel un double pliage, sur elle-même,
- et/ou soit doublé, ou présente, une structure mécaniquement pouvant comprendre, ou consister en, un cadre structurant, de préférence métallique pour alors réaliser un assemblage par soudage.

Dans les deux cas, c'est donc à l'endroit du scellement qu'on préparera celui-ci, en serrant là ensemble les bords des plaques, et non pas en périphérie extérieure des feuilles, d'un côté restant, comme dans US 9157230.

Il a en outre été noté qu'en utilisant des plaques grainées pour réaliser l'enveloppe, on disposera d'une réserve de déformation de matière utile en particulier pour les zones de pliure (éviter un déchirement pendant le formage) ou pour absorber une partie au moins des déformations des parois de l'enveloppe dues notamment à des contraintes thermiques.

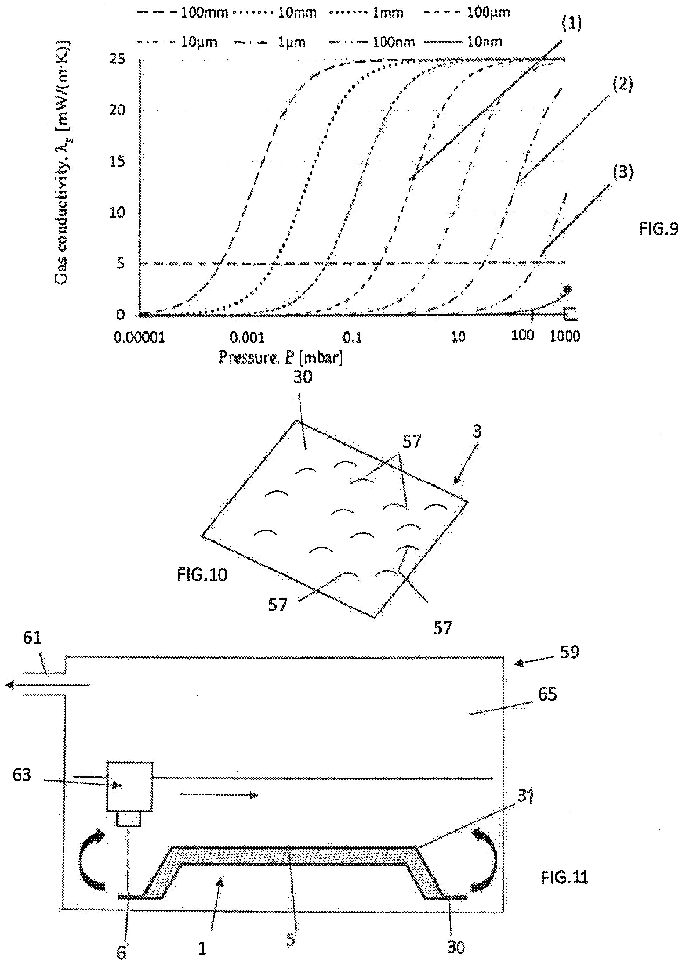

Une alternative à un grainage comme figure 10 ci-après, pourrait consister en la prévision d'au moins une zone en accordéon dépliable sous un certain effort.

Concernant le formage des première et seconde plaques métalliques, réaliser un formage incrémental (ISF) assurera une fabrication compatible avec les durées visées : décennales et au-delà.

Par exemple dans une application automobile où il faudra fixer à une partie d'un moteur la pièce obtenue, une telle fixation pourra s'avérer délicate, compte tenu de l'atmosphère à préserver dans l'enceinte et des contraintes diverses : vibrations, projections, éventuelle maintenance....

Aussi est-il proposé que les parois métalliques formant l'enceinte de la pièce soient entourées par un rebord de fixation qui comprendra une structure mécaniquement renforcée, telle qu'un cadre :

- située au moins localement autour du scellement entre les parois métalliques,
- et qui recevra, autour dudit scellement, des moyens de liaison avec la structure (partie de moteur ou autre) auquel on rapportera la pièce pour l'y fixer.

Le rebord de fixation pourra présenter une épaisseur de matière augmentée par rapport à celle(s) des parois métalliques, pour définir la structure mécaniquement renforcée et/ou l'endroit du scellement entre les parois métalliques.

Quant au pliage sur elle-même d'au moins une des plaques métalliques formant les parois, il pourra constituer une partie au moins de cette structure renforcée, en offrant une épaisseur de matière augmentée.

Au-delà de la réalisation d'une pièce creuse à double paroi, il est aussi prévu de réaliser une structure :

- où on réalise plusieurs dites pièces thermiquement isolantes, chaque pièce étant réalisée en cuvette à double paroi selon le procédé ci-avant,
- puis, une fois lesdites pièces scellées, on assemble entre elles au moins deux dites pièces scellées, en les disposant face à face pour réaliser la structure, laquelle comprend alors un volume intérieur, entre les doubles parois.

Chaque pièce d'isolation thermique comprendra donc une enveloppe étanche définissant une enceinte interne en dépression par rapport au milieu extérieur ou sous atmosphère contrôlée. La pièce présentera avantageusement une conductivité thermique inférieure à 100mW/m.K (à 20°C et dans un environnement à pression atmosphérique), l'enveloppe étanche comprenant donc des parois métalliques respectivement intérieure et extérieure globalement formées en creux et scellées ensemble périphériquement pour maintenir l'enceinte en dépression ou sous atmosphère contrôlée, lesdites parois métalliques étant disposées avec un creux dans l'autre, de façon à définir ensemble une cuvette à double paroi.

Une application de telles pièces, ou de structures assemblées, à la réalisation d'une partie au moins d'un carter de réception d'un fluide, en particulier de l'huile, soit entre -50°C et 15°C (quand le fluide est froid) soit entre 50°C et 300°C (quand le fluide est devenu chaud), est prévue, de même que celle d'un stockeur de calories pour un moteur de propulsion navale ou automobile, et celle d'une nacelle de moteur d'aéronef comprenant une structure interne fixe (dite IFS) pourvue de plusieurs dites pièces isolantes, certaines au moins ayant des formes incurvées .

Encore une autre application pourra concerner la réalisation d'un échangeur de chaleur ou d'une cuve de stockage :

- soumis(e) à une température comprise entre -150°C et -273°C et à une différence de températures entre un volume interne et un environnement extérieur supérieure à 100°C,
- et comprenant au moins une dite pièce isolante ayant tout ou partie des caractéristiques précitées.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :

- la figure 1 est une coupe verticale schématique d'une pièce isolante conforme à l'invention,
- les figures 2,3,7 en sont des vues locales agrandies, suivant différents modes de réalisation ;
- la figure 4 est une perspective schématique d'une autre zone de la pièce de la figure 1 ;
- les figures 5,6 montrent de nouveau les zones de fixation et de scellement de la pièce, en éclaté figure 6 ;
- la figure 8 schématise l'application de la pièce au réchauffage d'huile sur un navire ;
- la figure 9 montre des courbes de variation de conductivité (À) en fonction de la pression, pour quelques cœurs de pièces ;
- la figure 10 schématise un grainage de plaque métallique ;
- la figure 11 schématise une chambre à atmosphère contrôlée contenant un dispositif de scellement périmétrique de la pièce isolante à réaliser ;
- la figure 12 schématise une nacelle de moteur d'aéronef comprenant une structure interne fixe (IFS) pourvue de plusieurs dites pièces isolantes ;
- et la figure 13 montre une cuve formée de plusieurs portions de coquilles, ici deux demi-coquilles, à assembler face à face.

Un objectif de la présente invention est ainsi de créer une pièce sous atmosphère contrôlée (en pression et/ou en composition), hermétiquement scellé, résistant à la perforation, peu coûteux, à longévité effective de plusieurs années (10 ans et plus sont visés) de taille et de forme arbitraire et à haute résistance thermique R donc à forte capacité de réduire les transferts thermiques là où il est installé.

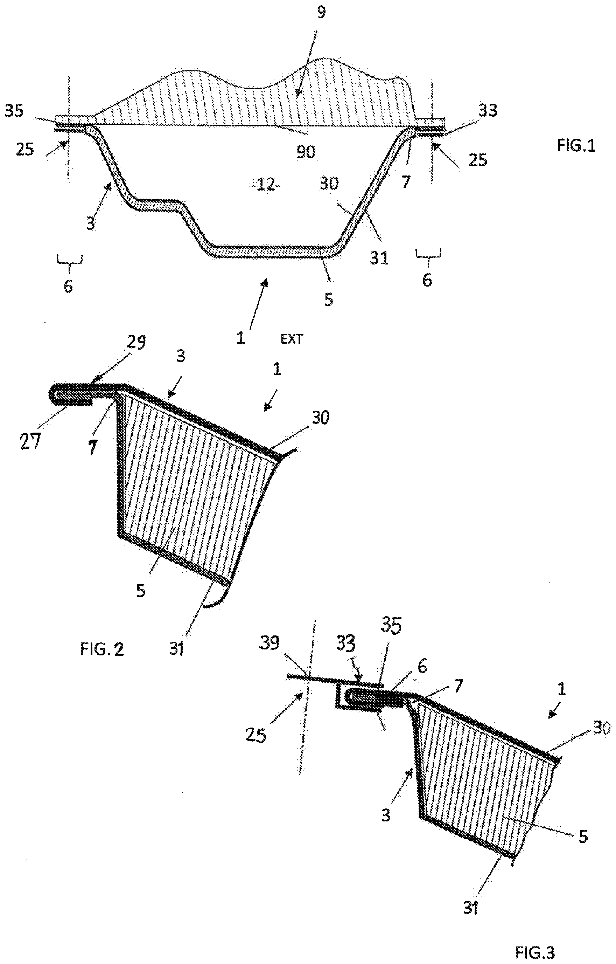

Les figures 1-5 illustrent différentes zones possibles d'une telle pièce 1 thermiquement isolante, qui comprend une enveloppe étanche à l'air 3 (voir taux de fuite en cause) définissant une enceinte 7 fermée sous atmosphère contrôlée en (dé)pression ou en composition.

L'enveloppe étanche 3 est définie par des parois ou plaques métalliques, respectivement intérieure 30 au moins localement concave et extérieure 31 au moins localement convexe, scellées ensemble sur toute le périmètre de l'enveloppe, en zone 6, pour maintenir l'enceinte en dépression ou sous atmosphère contrôlée, comme déjà mentionné. L'expression « métal » couvre les alliages.

Les parois 30, 31 ont chacune une épaisseur comprise entre 0,1 et 3mm, et typiquement entre 1 et 3mm.

Il s'agit de plaques métalliques choisies dans le groupe comprenant l'acier inoxydable, l'aluminium et d'autres métaux à conductivité thermique inférieure à 300W/m.K.

L'atmosphère contrôlée dans l'enceinte 7 peut consister en la présence d'un gaz tel que du $CO_2$.

A titre complémentaire ou alternatif, l'atmosphère contrôlée peut consister en une pression inférieure à la pression atmosphérique.

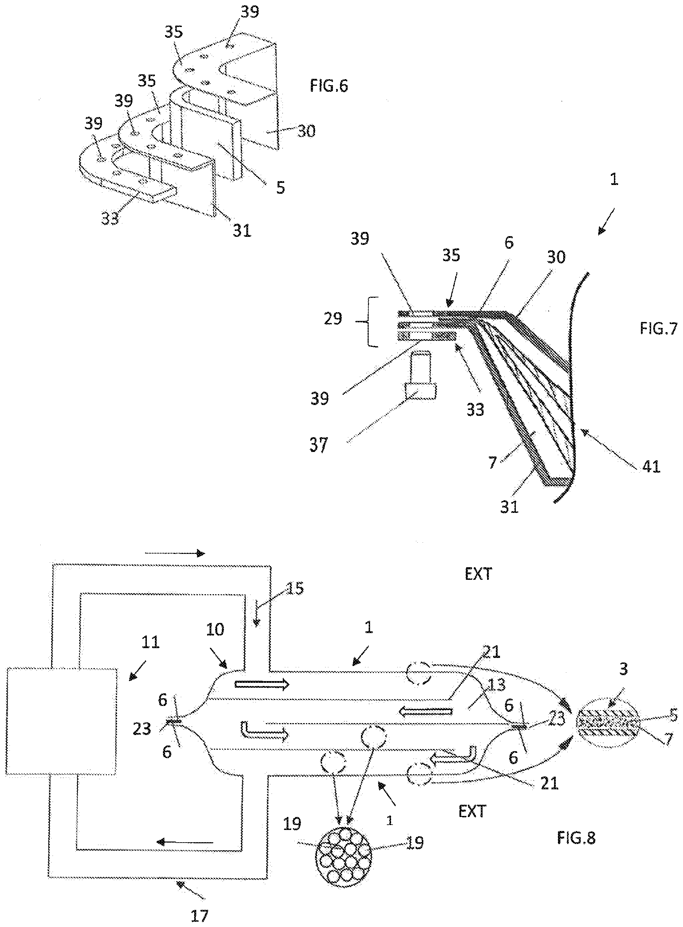

Bien que l'enceinte 7 puisse ne rien contenir en tant qu'élément structurel à visée d'isolation ou de barrière thermique, elle renferme ici, comme préféré, pour la qualité de cette isolation, un isolant thermique, comme figures 1-6, ou un écran thermo-réflecteur, comme schématisé figure 7.

Figures 1-3, l'isolant thermique est poreux et de préférence organique ou inorganique. Ceci est avantageux pour le vide visé.

« Poreux » désigne ici un matériau possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ont des tailles inférieures à 1 ou 2mm de façon à pouvoir garantir une bonne isolation thermique, et de préférence à 1 micron, et préférentiellement encore à $10^{-9}$m (structure nano-poreuse), pour des questions en particulier de tenue mécanique et/ou au vieillissement, et donc de possible dépression moins forte dans l'enceinte.

Parmi les isolants fibreux, ceux minéraux sont définis dans la norme NF B 20-001. Les isolants fibreux minéraux se regroupent en deux grandes familles : les laines de roche volcanique ou de laitier et les laines de verre.

Dans la réalisation telle que schématisée figures 1-6, l'isolant thermique définit un matériau cœur structurant 5 pour le panneau 1, c'est-à-dire qu'il participe à la tenue mécanique du panneau.

Dans cette réalisation, le matériau cœur 5 est un monolithe.

D'autant plus si le matériau cœur est structurant 5, la plaque intérieure 30 pourra être moins épaisse que la plaque extérieure 31, dès lors que l'effet de la pression extérieure (EXT) sera d'abord supporté par la paroi extérieure 31.

Par ailleurs, un matériau cœur 5 comprenant un aérogel sera favorablement considéré, comme tenu des avantages en termes de de conductivité thermique, densité, résistance mécanique, capacité à être moulé dans des formes complexes.

L'atmosphère contrôlée dans l'enceinte 7 est un paramètre majeur de la pièce 1 car elle lui permet d'assurer la fonction de super isolant thermique, si le matériau cœur 5 est un isolant thermique, et de préférence un isolant micro ou nanoporeux, a priori en combinaison avec une dépression (par rapport à la pression atmosphérique environnante) dans l'enceinte 7.

De fait, associer une enveloppe 3 performante et une atmosphère contrôlée, et en particulier dépressurisée, dans l'enceinte 7 permettra d'obtenir un PIV tridimensionnel à longue durée de vie pouvant être installé en particulier dans une automobile ou sur un bateau.

Ainsi a-t-on schématisé figure 1 l'application d'une pièce 1 en tant que carter de réception d'un fluide, tel qu'un lubrifiant, en particulier de l'huile pour un bloc moteur 9 de véhicule automobile. Il peut s'agir d'un stockeur 10 de calories dans le volume intérieur 12 que définit l'ensemble formé par la pièce creuse 1, en forme de cuvette, et une paroi extérieure 90 du bloc moteur 9 contre laquelle sera alors appliquée la pièce 1.

Telle est aussi l'application schématisée figure 8, pour un moteur 11 de propulsion navale.

Dans cette application, deux pièces 1 du type précité, avec chacune une double paroi formant l'enveloppe 3 scellée périphériquement en 6 et à matériau cœur 5, forment un boitier dans le volume intérieur 13 duquel d'un côté arrive un fluide 15 à gérer thermiquement (ce peut encore être de l'huile moteur), et de l'autre repart ce même fluide, via un circuit 17 qui passe par le moteur 11 où l'huile est utilisée. Dans le volume 13, le fluide 15 peut passer en échange thermique avec des éléments 19 de stockage et restitution d'énergie thermique, tels que des billes, à base de matériau à changements de phases solide/liquide (MCP). Il s'agira d'un matériau tel qu'une paraffine ou un acide. Les températures de changements de phases seront comprises entre -50°C et 15°C (pour une isolation vis-à-vis d'un environnement froid par exemple) ou entre 50 et 300°C (pour une application navale par exemple, ou une isolation vis-à-vis d'un environnement très chaud)ce qui exclut les matériaux à changement de phase préférentiellement utilisé pour le bâtiment (18 - 24°C) et les applications médicales (35 - 40°C).

Après avoir par exemple été chargés en énergie chaude, par liquéfaction, ces éléments 19 pourront libérer ultérieurement cette énergie, par exemple au démarrage du moteur, pour préchauffer l'huile du moteur afin de diminuer l'émission de polluants à ce moment. Des parois transversales 21 dans le volume intérieur 13 y créent des chicanes favorables pour les échanges thermiques à réaliser.

Fixé à une structure du bateau, à côté du moteur 11, le boitier stockeur 10 est donc fermé de façon étanche au fluide 15, par la réunion des différentes pièces 1 qui sont serrées ou fixées ensemble périphériquement, en 23.

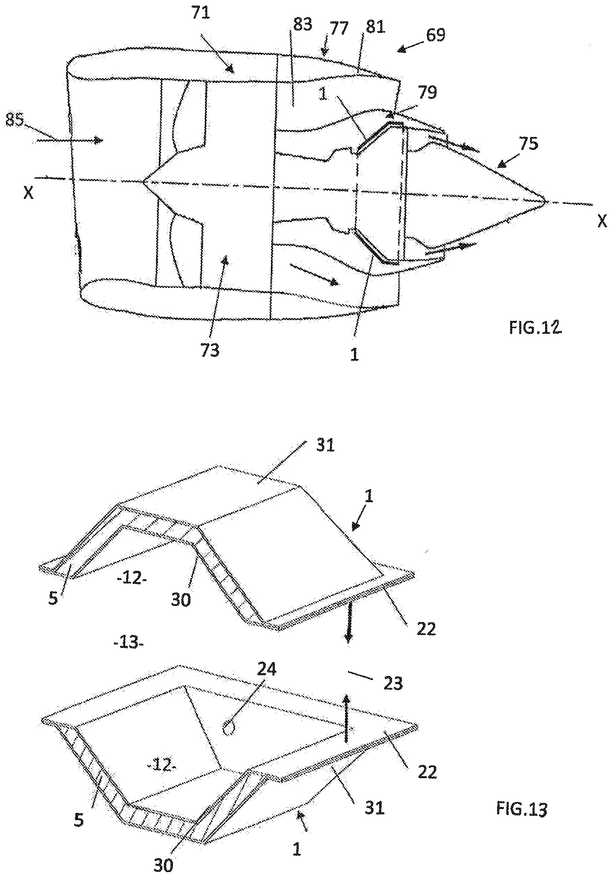

Le boitier ou cuve 10 peut être réalisé(e) comme schématisé figure 13, en plusieurs portions de coquilles à assembler face à face, ici deux demi-coquilles, chacune formée d'une pièce 1 selon l'invention. De fait on retrouve plusieurs fois, ici deux fois, la pièce creuse à double paroi de la figure 1, avec interposition préférée, entre les plaques 30,31 formées en creux, d'un matériau cœur 5 (voire d'un écran 41). Ensuite, après avoir disposées ces portions de coquilles avec les creux (volumes intérieurs 12) face à face, comme sur la figure 13, on va pouvoir venir fixer les pièces en 23, typiquement à l'endroit des rebords 22 par soudage, afin de créer la chambre 13 et la cuve fermée attendue.

Un ou plusieurs orifices 24 formés de façon étanche à l'air à travers une ou plusieurs des doubles parois 30-31 permettra une entrée et/ou une sortie de fluide dans ou hors de la chambre 13, via par exemple un tube.

Dans l'application automobile de la figure 1, la pièce 1 formant carter est fixée au (ici sous le) bloc moteur 9, via les moyens de fixation 25. Les figures 3 à 7 détaillent cet aspect.

Mais d'abord figure 2, on voit que, notamment pour une application où le poids est un paramètre critique, si l'épaisseur des plaques 30,31 est, par plaque, inférieur à 3mm (par exemple pour des plaques en acier inoxydable de type 304L), il pourra être mécaniquement utile qu'à l'endroit de tout le pourtour du scellement les plaques 30,31 présentent un pliage sur elles-mêmes, tel un double pliage, repéré 27 figures 2,3. Ainsi, on épaissira en 29 la matière disponible pour le scellement et/ou pour la tenue en suspension, une fois la pièce fixée à son corps support, ici le bloc moteur 9.

Une autre manière de créer une épaisseur 29 de matière augmentée par rapport à celle(s) des parois métalliques 30,31, en vue de définir localement, sur la pièce 1, une structure mécaniquement renforcée et/ou l'endroit du scellement 6, est de rapporter un cadre ou des tronçons de cadre 33.

Dans les deux cas, l'élément 33 sera favorablement associé à un rebord 35 que présentera la pièce 1, sur tout son périmètre.

En particulier, et comme illustré, les parois métalliques 30,31 pourront alors être chacune entourées par un rebord de fixation 35 comprenant la structure mécaniquement renforcée formée alors par le cadre (ou les tronçons de cadre) 33.

Cet élément 33 sera ainsi situé au moins localement autour du scellement 6. Et il recevra avantageusement, autour de ce scellement, les moyens 25 de liaison avec le corps auquel on a prévu de le fixer.

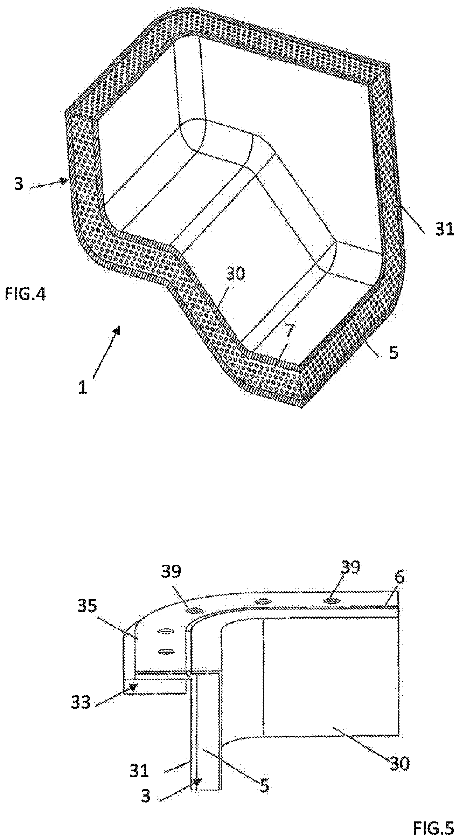

Ces moyens 25 de liaison pourront comprendre des moyens démontables, tels des vis 37. Figures 5-7, on voit qu'alors des trous 39 pourront traverser l'élément 33 et les rebords de fixation 35, afin de recevoir les moyens 25 de liaison à fixer au bloc moteur 9, dans l'exemple. Des joints (non représentés) seront prévus à l'endroit de ces fixations pour ne pas altérer l'étanchéité assurée par l'enveloppe 3.

L'alternative imaginée figure 3 est un cadre 33 en forme de pince recevant le rebord 35 et se poursuivant périphériquement par une surface de réception des éléments de fixation 25,39.

Dans tous les cas, la disposition de l'(des)élément(s) 33 autour du scellement 6 permettra d'isoler la fixation du scellement, dont elle n'affectera ainsi pas la qualité. Les perçages 39 n'auront pas d'impact sur l'étanchéité de l'enceinte 7.

Ceci est essentiel, puisqu'on le rappelle, dans chaque pièce 1, c'est l'atmosphère contrôlée à pression inférieure à $10^5$ Pa qui y règne qui réduira la composante gazeuse de la conductivité thermique. Cependant, à température supérieure à 150°C, la composante radiative peut avoir une grande influence. On peut absorber cette composante via l'opacité du matériau. Cette absorption dépend directement du coefficient d'extinction moyen A de Rosseland du matériau (voir tableau ci-dessous), quand celui-ci comprend au moins un bloc isolant poreux :

| Composition | $A$ (m²/kg) |
|---|---|
| $SiO_2$ | 22,7 |
| $SiO_2$ opacifié | 84,2 |
| $TiO_2$ | 32,6 |
| $ZrO_2$ | 38,9 |
| Carbone | > 1 000 |
| Résorcinol-ormaldéhyde (RF) | 60,1 |
| Mélamine-formaldéhyde (MF) | 47,2 |
| Polyuréthane | 47,6 |
| Polystyrène | 47,8 |

On notera ainsi l'intérêt, dans des applications où la température atteint sensiblement ou dépasse 150°C, à ce que les blocs de matériau cœur 5 aient un coefficient d'extinction moyen A de Rosseland supérieur ou égal à 30.

Tel est le cas d'un gel de silice, ou de poudre d'acide silicique (SiO2), pressé en plaque, ou de la composition carbonée pyrolysée présentée dans FR-A-2996850 et dont l'évolution À=f(P) est montrée figure 9 (courbe 2) que l'on recommande, dans sa version pyrolysat (voir figure 9 ; courbe 3), pour réaliser alors la structure interne 5, en ce qu'il s'agit du pyrolysat d'un gel monolithique polymérique organique ou dudit gel sous forme d'un monolithe de carbone poreux super isolant thermique (i.e. de conductivité thermique inférieure ou égale à 100mW/m.K, et de préférence inférieure ou égale à 26mW/m.K). Plus précisément, ce pyrolysat est une composition organique gélifiée formant un gel polymérique apte à former par pyrolyse un monolithe de carbone poreux, la composition étant à base d'une résine issue au moins en partie de polyhydroxybenzène(s) R et de formaldéhyde(s) F, ladite composition gélifiée comprenant au moins un polyélectrolyte cationique hydrosoluble P. Favorablement, ce polyélectrolyte sera un polymère organique choisi dans le groupe constitué par les sels d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamideco-chlorure de diméthylammonium) et leurs mélanges.

Les courbes de la figure 9 représentent l'évolution de la conductivité thermique gazeuse en fonction de la pression, pour différents matériaux poreux. Les valeurs 10nm, 100nm, 100 microns... sont les tailles caractéristiques des pores du matériau poreux concerné.

Ainsi la courbe 3 représente le cas d'un matériau nanoporeux (aérogel), la courbe 2 représente le cas d'un matériau microporeux ayant des pores de 1micron et la courbe 1 représente le cas d'un matériau microporeux ayant des pores de 100microns.

Avec de tels blocs, on pourra former un isolant thermique 5 à effet mécaniquement structurant (le polyuréthane pouvant être une alternative, bien que notablement moins performante thermiquement). Un avantage du pyrolysat de la composition présentée dans FR-A-2996850 est toutefois qu'il n'est pas inflammable.

En alternative, voire en complément, un écran thermo-réflecteur 41, pourra être contenu dans l'enceinte 7, comme illustré figure 7, afin de limiter les échanges radiatifs (rayonnement thermique) à travers la pièce. Il pourra s'agir d'un écran à couches multiples.

L'élément écran thermo-réflecteur 41, métallique, pourra être fixé, y compris soudé, avec l'une au moins des feuilles métalliques 30,31 pour son maintien en place dans l'enceinte 7.

Ainsi, on peut envisager des protections dont la fonction isolante sera assurée par un vide assez poussé (typiquement moins de $10^{-1}$Pa) en association avec des films thermo-réflecteurs 500. Ce seront avantageusement des feuillards dont le coefficient de réflexion des ondes thermiques (cf tableau ci-dessous), entre $0.1\mu m$ et $100\ \mu m$ de longueur d'ondes, sera suffisamment élevé pour stopper la chaleur émise par rayonnement en la réfléchissant. Une solution pertinente comprendra des feuillards métalliques constituant une enveloppe avec une pression interne <$10^3$Pa et un ou plusieurs films thermo-réflecteurs d'épaisseur totale inférieure à 300mm. Chaque film devra avoir une émissivité très faible : idéalement < 0,1. Une autre solution avec une succession de couche de film de mylar™ aluminisé et de feutre isolant est aussi possible.

On sait que l'émissivité est égale au coefficient d'absorption. Et le coefficient de transmission sera faible car, fin, un film absorbe moins d'énergie. Ainsi un émissivité basse garantit un bon coefficient de réflexion donc une bonne protection contre le rayonnement thermique.

Quelle que soit la nature de l'élément 5, et même si une atmosphère par exemple de CO2 dans l'enceinte 7 pourrait convenir dans certains cas moins exigeant en termes d'isolation thermique, il est considéré que c'est malgré tout la pression dans l'enceinte qui permettra à la pièce 1 d'atteindre une conductivité thermique réellement faible. En pratique, la pression dans l'enceinte 7 sera ainsi favorablement comprise entre 0,00001 mbar et moins de 1000 mbar (1000 mbar = $10^5$ Pa), en début de vie (dans l'année ou les mois qui suivent la fabrication). En outre, avec une pression interne de 1 Pa, des feuilles et un matériau cœur 5 selon FR29966856 d'une épaisseur de 10mm, un taux de fuite comme précité (typiquement $10^{-10}$ Pa.m$^3$/s), la pièce 1 garantira une pression interne de $10^3$Pa (10mbar) au maximum après au moins 10 ans de vie opérationnelle, selon la norme RTCA-DO 160-G section 5 Cat A (de -55°C à 400°C), avec des taux de fuite identiques (à 20% près) avant l'application du test selon la norme et après.

A ce sujet, on peut déduire de la figure 6 que, si la pression maximale admissible dans l'enceinte 7, en fin ou début de vie du pièce 1, est fixée à 100 mbar, alors aucun matériau dont la porosité est supérieure à 10nm ne pourra être performant comme l'est tant le gel de la courbe (2) que son pyrolysat (courbe 3), par rapport à un cœur 5 à base de PU (polyuréthane) ; courbe (1).

Une dépression dans l'enveloppe 7 créera une différence de pression, qui peut atteindre $10^5$ Pa, entre le milieu externe et l'enceinte 7. Si l'on craint que l'enveloppe 3 ne puisse pas absorber seule cette contrainte, un matériau cœur 5 structurant aidera à supporter la compression. Des renforts dans ce matériau pourront aider encore davantage. Ces renforts peuvent être des cales ou des structures particulières comme des nids d'abeilles. Si la ou l'une au moins des plaques 30,31 est en métal grainé (réalisé par exemple par des rouleaux bosselés), avec donc des dômes 57 comme schématisé figure 10, on pourra aussi améliorer la tenue mécanique de la pièce 1.

Un ou plusieurs getters (ou pièges à gaz) servant à empêcher l'oxydation du matériau cœur et à fixer les gaz qui pénètrent dans l'enceinte 7 ou qui sont émis par le cœur 5 au cours de son cycle de vie pourront être prévus. Chaque getter permettra de limiter l'augmentation de la pression et de capter l'humidité, d'où un impact sur la conductivité.

Quoi qu'il en soit, la pièce 1 présentera sur une gamme de température de -20°C à 500°C une conductivité thermique comprise entre 10mW/m.K et 100mW/m.K, et favorablement inférieure à 26mW/m.K (air).

Et selon une caractéristique essentielle à la tenue du panneau dans le temps comme déjà indiqué, le scellement 6 de la(des) feuilles métalliques de l'enveloppe, réalisé sous atmosphère contrôlée, présentera un taux de fuite inférieur à $10^{-6}$ Pa.m$^3$/s après un premier traitement thermique selon la norme RTCA-DO 160-G section 5 Cat A (de -55°C à 400°C) et un second traitement thermique à -196°C pendant 1 heure. Ceci permettra au moins d'exclure la possibilité que la(les) plaques 30,31 soient doublées de plastique par exemple et qu'il n'y ait pas de scellement direct métal/métal, chaque plaque formant de fait et a priori la limite tant interne qu'externe de l'enveloppe 3.

La pression interne de l'enceinte 7 pourra ainsi être maintenue pendant des durées de l'ordre de 10 ans et un peu plus.

Le taux de fuite s'exprime selon l'équation suivante :

$$\tau = \Delta padmissible \cdot \frac{Volume\ sous\ vide}{Durée\ de\ vie}$$

*Δpadmissible* est la différence, en Pa, entre la pression admissible en fin de vie dans la pièce et celle en début de vie ;
Le *Volume sous vide* est le volume de l'enceinte 7, en m$^3$;
La *Durée de vie* s'exprime en s.

Par exemple pour une protection constituée d'une enveloppe 7 de 1L de volume sous vide, une durée de vie de 3 ans correspond à un taux de fuite de $10^{-8}$ Pa.m$^3$/s. Ci-dessous est présenté un tableau référençant les taux de fuite et les durées de vie pour une protection d'un volume d'un litre et une différence de pression en fin de vie de 10mbar.

| | | |
|---|---|---|
| 1.E-04 | 1 | jour |
| 1.E-05 | 12 | jours |
| 1.E-06 | 116 | jours |
| 1.E-07 | 3 | années |
| 1.E-08 | 32 | années |
| 1.E-09 | 317 | années |
| Taux de fuite mbar.L/s | | |

Les taux de fuites seront mesurés suivant les normes :

- Norme ISO 17025 : Exigences de qualité et de compétence propres aux laboratoires d'essais et d'analyses.
- Norme ISO 3530 : Technique du vide - Etalonnage des spectromètres de masse détecteurs de fuites.

Un test à l'hélium pourra être requis si le taux de fuite à mesurer est inférieur à $10^{-4}$ Pa.m$^3$/s. Au-dessus, on pourra utiliser un test air sous eau.

Un point important sera donc en fait lié au type de scellement 6 réalisé.

La figure 11 schématise le fait qu'il s'agit d'un scellement 6 réalisé sous atmosphère contrôlée, directement dans le volume interne 65 d'une chambre 59 à atmosphère contrôlée en pression et/ou en composition.

Ainsi, favorablement, l'étape de scellement comprendra un soudage entre elles (continu et sans matériau d'apport, donc différent d'un simple brasage) des première et seconde plaques métalliques 30,31, au moins en partie dans la chambre 65 en dépression et/ou sous atmosphère contrôlée. Une partie de la soudure aura pu être réalisée antérieurement, hors de la chambre 65.

Grâce à un système d'évacuation de gaz 61, il y règne une pression inférieure à $10^5$ Pa, de préférence entre $10^{-3}$ Pa et $10^2$ Pa, et encore de préférence entre $10^{-3}$ Pa et $10°$ Pa (vide primaire). Et c'est donc dans cette chambre 59 qu'une machine de scellement 63 a été préalablement placée. Après que la dépression adaptée aura été réalisée dans le volume 65, cette machine effectuera donc ce scellement en zone 6, en une seule ligne continue, là où on aura de préférence serré ensemble les plaques.

En alternative, ou en complément, le système 61 pourrait servir à substituer à de l'air un gaz ayant une conductivité thermique inférieure à celle de l'air ambiant (comme le $CO_2$) dans le volume 65 de la chambre 59.

Il est donc aussi possible que seule une partie de la soudure continue 6 soit réalisée dans de la chambre 59, après soudage en continu d'une première partie hors de la chambre. Ainsi, on peut prévoir de souder en continu hors de la chambre 59 trois côtés sur les quatre dans la solution de la figure 1, le quatrième étant soudé en continu dans la chambre 59 fermée. L'important est que l'atmosphère contrôlée de la chambre puisse atteindre le volume interne 7 avant fermeture complète périphérique de ce volume, via la soudure 6.

Même si d'autres types de soudage peuvent être prévus, favorablement ce scellement comprendra l'un parmi un soudage à la molette, un soudage sous faisceau d'électrons, un soudage diffusion, un soudage par induction et un soudage par micro-plasma réalisé donc avec la machine 63 adaptée.

Ainsi, si un matériau cœur 5 est prévu, et qu'une pièce en forme de cuvette comme sur la figure 1 ou 4 est visée, il suffira le moment venu :

- de former les première et seconde plaques métalliques 30,31 pour constituer les parois (au moins localement) respectivement intérieure concave 30 et extérieure convexe 31 de la pièce finie ou d'une ébauche de celle-ci,
- lors de ces formages, d'adapter les formes des plaques de sorte qu'elles puissent être mises en contact l'une de l'autre, périphériquement (typiquement via le rebord 35), tout en réservant alors entre elles un espace (volume 7, après scellement), à l'intérieur de cette périphérie,
- d'interposer entre ces plaques le matériau cœur 5 (ou l'écran 41), ceci avant ou après avoir placé le creux de la première plaque 30 dans le creux de la seconde plaque 31, pour définir alors une cuvette à double paroi,
- de mettre en place le tout dans la chambre 59, les plaques étant alors suffisamment proches l'une de l'autre pour être scellées ensemble, directement, en zone 6, de sorte que soit créée à l'endroit dudit espace l'enceinte 7 en dépression et/ou sous atmosphère contrôlée.

On ouvrira alors la chambre 59 et récupèrera une pièce 1 prête à l'emploi.

On notera que, favorablement, avant de sceller les plaques, voire avant de mettre en place le matériau cœur 5 entre elles, on le moulera, par exemple dans un moule à cire perdue, sensiblement aux formes des parois intérieure et extérieure des première et seconde plaques métalliques 30,31, respectivement. On pourrait aussi verser une poudre entre les plaques 30,31 mises en forme, puis y faire prendre cette poudre avec un liant, de manière à figer la forme du matériau cœur 5.

Quant au formage des plaques 30,31, on pourra favorablement l'obtenir par un formage incrémental (ISF). Un formage par emboutissage ou moulage est aussi possible.

Parmi les réalisations envisageables, on peut citer un échangeur de chaleur et une cuve de stockage.

Dans chaque cas, tout ou partie des parois de l'échangeur ou de la cuve sera constituée comme la pièce 1. Un volume utile interne de l'échangeur ou de la cuve sera ainsi isolé thermiquement de l'environnement extérieur.

Le volume de la cuve pourra être fermé par un couvercle ouvrable ou séparable, formé aussi comme une pièce 1.

Dans l'échangeur, des entrées et sorties de fluides permettront la circulation d'au moins deux fluides à placer en échange thermique dans l'échangeur que les pièces 1 protègeront thermiquement, en périphérie. Si les entrées et sorties de fluides doivent traverser au moins une pièce 1, une étanchéité autour de chaque passage sera assurée, typiquement par un cordon de scellement.

Dans l'application « IFS » comme figure 12, une nacelle 69 comprend, le long de l'axe longitudinal XX du moteur, après une section médiane 71 entourant une soufflante 73 du turboréacteur 75, une section aval 77. La section aval comprend une structure interne 79 (IFS), une structure externe (encore appelée outer fixed structure ou OFS) 81 et un capot mobile (non représenté) comportant des moyens d'inversion de poussée. L'IFS 79 ainsi que l'OFS 81 sont fixes par rapport au capot mobile. Ils délimitent une veine 83 permettant le passage d'un flux d'air 85 entrant dans le moteur, ici dans la soufflante 73. Un sommet de la nacelle reçoit un pylône d'attache permettant de fixer la nacelle typiquement à une aile de l'aéronef.

C'est dans la structure interne 79 (IFS) que sont disposées les pièces 1, chacune ayant avantageusement une forme globalement incurvée, en particulier cintrée, compte tenu de la forme globalement annulaire de cette structure interne. Une forme individuelle globalement en secteur d'anneau conviendra bien à chaque pièce 1, l'ensemble définissant donc une forme annulaire, avec des secteurs circonférentiellement bout à bout. De ce fait une réalisation en portions de coquille ou de cuvette, comme le permet le processus de fabrication présenté ci-avant est réaliste.

Pour assembler entre elles plusieurs pièces 1 successives le long de la double paroi 30,31, plutôt que de les fixer bout à bout entre elles, on pourra utiliser des éléments intermédiaires de connexion interposés entre deux pièces 1 et fixés avec elles, à l'endroit des rebords 22 ou 35. Ces fixations pourront s'opérer par vissage, soudage, ou autre.

**Revendications**

1. Procédé de réalisation d'une pièce thermiquement isolante présentant une conductivité thermique inférieure à 100mW/m.K, à 20 °C et dans un environnement à pression atmosphérique, avec des parois respectivement intérieure et extérieure (300,310), le procédé comprenant des étapes :

   - d'utilisation d'au moins une première et une seconde plaques métalliques (30,31),
   - de formage en creux de la première plaque métallique (30) pour constituer une partie au moins de la paroi intérieure de la pièce finie ou d'une ébauche de celle-ci,
   - de formage en creux de la seconde plaque métallique (31) pour constituer une partie au moins de la paroi extérieure de la pièce finie ou d'une ébauche de celle-ci,

   **caractérisé en ce que** le procédé comprend en outre des étapes :

   - où le formage en creux de la première plaque métallique est intérieurement au moins localement concave pour constituer une partie au moins de ladite paroi intérieure,
   - où le formage en creux de la seconde plaque métallique est extérieurement au moins localement convexe pour constituer une partie au moins de ladite paroi extérieure,
   - où le creux de la première plaque métallique est placé dans le creux de la seconde plaque, définissant ainsi ensemble une cuvette à double paroi,
   - où, lors des formages, on adapte les formes des première et seconde plaques métalliques de sorte qu'elles puissent être mises en contact l'une de l'autre, périphériquement, tout en réservant alors entre elles un espace, à l'intérieur de cette périphérie,
   - puis où on met en place les première et seconde plaques métalliques, chacune ayant une épaisseur inférieure à 3mm, dans une chambre (65) à dépression avec une pression inférieure à la pression ambiante donc inférieure à $10^5$Pa et/ou remplie par un gaz ayant une conductivité thermique inférieure à celle de l'air donc inférieure à 26mW/m.K, où elles sont soudées entre elles, périphériquement, selon une soudure continue, de sorte qu'est créée entre elles, à l'endroit dudit espace, une enceinte (7) sous pression inférieure à la pression ambiante donc inférieure à $10^5$Pa en dépression et/ou remplie par un gaz ayant une conductivité thermique inférieure à celle de l'air donc inférieure à 26mW/m.K.

2. Procédé de réalisation d'une structure :

   - où on réalise plusieurs dites pièces thermiquement isolantes, chaque pièce étant réalisée en cuvette à double paroi selon le procédé de la revendication 1, et,
   - où, une fois les pièces (1) scellées, on assemble entre elles au moins deux dites pièces scellées, en les disposant avec les creux des première et seconde plaques métalliques face à face pour réaliser la structure, laquelle comprend un volume intérieur (12,13), entre les doubles parois.

3. Procédé selon l'une des revendications précédentes où, avant de souder entre elles les première et seconde plaques métalliques (30,31) dans ladite chambre (65), on interpose entre elles un matériau cœur (5), isolant thermique.

4. Procédé selon la revendication 3 où avant de souder entre elles les parois intérieure et extérieure, on moule le matériau cœur (5) en creux, sensiblement aux formes des parois intérieure et extérieure des première et seconde plaques métalliques (30,31), respectivement à placer l'une dans l'autre.

5. Procédé selon la revendication 4, où on moule le matériau cœur (5) avant de le mettre en place entre les première et seconde plaques métalliques (30,31).

6. Procédé selon l'une des revendications précédentes, où lors de l'étape d'utilisation on utilise des première et seconde plaques métalliques (30,31) d'épaisseur comprises entre 0,07mm et 3mm et choisies dans le groupe comprenant l'acier inoxydable, l'aluminium et d'autres métaux à conductivité thermique inférieure à 300W/m.K.

7. Pièce d'isolation thermique (1) comprenant une enveloppe étanche définissant une enceinte interne (7) en dépression par rapport au milieu extérieur, alors sous pression inférieure à la pression ambiante et donc inférieure à $10^5$Pa, ou remplie par un gaz ayant une conductivité thermique inférieure à celle de l'air et donc inférieure à 26mW/m.K, la pièce présentant une conductivité thermique inférieure à 100mW/m.K, à 20°C et dans un environnement à pression atmosphérique, l'enveloppe étanche comprenant des parois métalliques (30,31) respectivement intérieure et extérieure (30,31) scellées ensemble périphériquement (6) pour maintenir l'enceinte interne sous ladite pression inférieure à la pression ambiante donc inférieur à $10^5$Pa ou remplie par ledit gaz ayant une conductivité thermique inférieure à celle de l'air et donc inférieure à 26mW/m.K, et ayant chacune une épaisseur inférieure à 3mm, **caractérisée en ce que** :

- ledit scellement est une soudure continue, et
- les parois métalliques (30,31) respectivement intérieure et extérieure (30,31) sont toutes deux globalement formées en creux et disposées avec un creux dans l'autre définissant ainsi ensemble une cuvette (12) à double paroi (30,31).

8. Pièce selon la revendication 7, où les parois métalliques sont entourées par un rebord de fixation (35) qui comprend une structure mécaniquement renforcée (33), telle qu'un cadre :

- située au moins localement autour du scellement entre les parois métalliques,
- et qui reçoit, autour dudit scellement, des moyens de liaison avec une structure à laquelle on rapporte la pièce pour l'y fixer,

le rebord de fixation présentant une épaisseur de matière augmentée par rapport à celle(s) des parois métalliques, pour définir la structure mécaniquement renforcée et/ou l'endroit du scellement (6) entre les parois métalliques.

9. Pièce selon l'une des revendications 7 ou 8, où l'enveloppe étanche (3) entoure un matériau cœur comprenant un isolant thermique poreux (5) organique ou inorganique définissant un élément structurant de soutien des parois métalliques (30,31) face à la dépression régnant dans l'enceinte interne (7).

10. Pièce selon l'une des revendications 7 à 9, qui définit une partie au moins d'un carter de réception d'un fluide à une température évoluant soit entre -50°C et 15°C soit entre 50°C et 300°C.

11. Stockeur de calories pour un moteur de propulsion navale ou automobile, le stockeur de calories comprenant la pièce selon l'une des revendications 8 à 10.

12. Nacelle de moteur d'aéronef comprenant une structure interne fixe (17) pourvue de plusieurs dites pièces d'isolation thermique (1) selon l'une des revendications 8 à 9, les pièces d'isolation thermique étant assemblées ensemble et présentant chacune une forme incurvée.

**Patentansprüche**

1. Verfahren zur Herstellung eines wärmeisolierenden Teils mit einer Wärmeleitfähigkeit von unter 100 mW/m.K bei 20°C in einer Umgebung mit atmosphärischem Druck, enthaltend eine Innen- und eine Außenwand (300, 310), wobei das Verfahren die folgenden Schritte umfasst:

- Verwenden zumindest einer ersten und einer zweiten Metallplatte (30, 31),
- Tiefformen der ersten Metallplatte (30), um zumindest einen Abschnitt der Innenwand des hergestellten Teils oder eines Rohlings davon zu bilden,
- Tiefformen der zweiten Metallplatte (31), um zumindest einen Abschnitt der Außenwand des hergestellten Teils oder eines Rohlings davon zu bilden,

**dadurch gekennzeichnet, dass** das Verfahren ferner Schritte umfasst, wobei:

- das Tiefformen der ersten Metallplatte innen zumindest bereichsweise konkav erfolgt, um zumindest einen Abschnitt der Innenwand zu bilden,
- das Tiefformen der zweiten Metallplatte außen zumindest bereichsweise konvex erfolgt, um zumindest einen Abschnitt der Außenwand zu bilden,
- die Vertiefung der ersten Metallplatte in der Vertiefung der zweiten Platte angeordnet wird, um eine doppelwandige Wanne zu definieren,
- bei den Formvorgängen die Formen der ersten und der zweiten Metallplatte so angepasst werden, dass sie umfänglich miteinander in Kontakt gebracht werden können und dabei innerhalb dieses Umfangs ein Freiraum zwischen diesen erhalten bleibt,

- die erste und die zweite Metallplatte, die jeweils eine Dicke unter 3 mm haben, dann in einer Unterdruckkammer (65) angeordnet werden, die einen Druck unter dem Umgebungsdruck, also unter $10^5$ Pa aufweist und/oder mit einem Gas mit einer geringeren Wärmeleitfähigkeit als Luft, also unter 26 mW/m.K, befüllt ist, wobei sie umfänglich mit einer durchgehenden Schweißnaht miteinander verschweißt werden, so dass an der Stelle des Freiraums ein Raum (7) entsteht, der einen Druck unter dem Umgebungsdruck, also unter $10^5$ Pa Unterdruck, aufweist und/oder mit einem Gas mit einer geringeren Wärmeleitfähigkeit als Luft, also unter 26 mW/m.K, befüllt ist.

2. Verfahren zur Herstellung einer Struktur, wobei

- mehrere wärmeisolierende Teile hergestellt werden, wobei jedes Teil als doppelwandige Wanne gemäß dem Verfahren nach Anspruch 1 hergestellt wird, und
- nachdem die Teile (1) abgedichtet wurden, zumindest zwei dieser abgedichteten Teile zusammengefügt werden, indem sie mit den Vertiefungen der ersten und der zweiten Metallplatte einander gegenüberliegend angeordnet werden, um die Struktur zu bilden, die ein Innenvolumen (12, 13) zwischen den Doppelwänden enthält.

3. Verfahren nach einem der vorangehenden Ansprüche, wobei vor dem Zusammenschweißen der ersten und der zweiten Metallplatte (30, 31) in der genannten Kammer (65) ein wärmeisolierendes Kernmaterial (5) zwischen sie eingefügt wird.

4. Verfahren nach Anspruch 3, wobei vor dem Zusammenschweißen der Innen- und der Außenwand das Kernmaterial (5) tiefgeformt wird, im Wesentlichen entsprechend den Formen der Innen- und der Außenwand der ersten und der zweiten Metallplatte (30, 31), die jeweils ineinander anzuordnen sind.

5. Verfahren nach Anspruch 4, wobei das Kernmaterial (5) vor dem Anordnen zwischen der ersten und der zweiten Metallplatte (30, 31) geformt wird.

6. Verfahren nach einem der vorangehenden Ansprüche, wobei bei dem Schritt der Verwendung eine erste und eine zweite Metallplatte (30, 31) verwendet werden, die eine Dicke zwischen 0,07 mm und 3 mm haben und aus der Gruppe ausgewählt sind, die aus rostfreiem Stahl, Aluminium und weiteren Metallen mit einer Wärmeleitfähigkeit von weniger als 300 W/m.K besteht.

7. Wärmeisolierendes Teil (1) mit einer dichten Hülle, die einen Innenraum (7) definiert, der einen Unterdruck gegenüber der äußeren Umgebung, also einen Druck unter dem Umgebungsdruck, also unter $10^5$ Pa, aufweist oder und mit einem Gas mit einer Wärmeleitfähigkeit unter der von Luft, also unter 26 mW/m.K, befüllt ist, wobei das Teil eine Wärmeleitfähigkeit unter 100 mW/m.K bei 20°C in einer Umgebung mit atmosphärischem Druck aufweist, wobei die dichte Hülle eine innere und eine äußere (30, 31) Metallwand (30, 31) aufweist, die am Umfang (6) dicht miteinander verbunden sind, um den Innenraum bei dem Druck unter dem Umgebungsdruck, also unter $10^5$ Pa, zu halten, oder mit dem Gas mit einer Wärmeleitfähigkeit unter der von Luft, also unter 26 mW/m. K, befüllt ist, und die jeweils eine Dicke von weniger als 3 mm haben, **dadurch gekennzeichnet, dass**

- die Abdichtung eine durchgehende Schweißnaht ist und
- die innere und die äußere (30, 31) Metallwand (30, 31) jeweils tiefgeformt sind und mit einer Vertiefung in der anderen so angeordnet sind, dass sie zusammen eine Wanne (12) mit Doppelwand (30, 31) bilden.

8. Teil nach Anspruch 7, wobei die Metallwände von einem Befestigungsflansch (35) umgeben sind, der eine mechanisch verstärkte Struktur (33), wie etwa eine Rahmenstruktur, aufweist:

- die sich zumindest bereichsweise um die Abdichtung zwischen den Metallwänden befindet,
- und die um die genannte Abdichtung herum Mittel zur Verbindung mit einer Struktur aufnimmt, an die das Teil angesetzt wird, um es daran zu befestigen, wobei der Befestigungsflansch eine im Verhältnis zu den Metallwänden erhöhte Dicke aufweist, um die mechanisch verstärkte Struktur und/oder die Stelle der Abdichtung (6) zwischen den Metallwänden zu definieren.

9. Teil nach einem der Ansprüche 7 oder 8, wobei die dichte Hülle (3) ein Kernmaterial mit einer organischen oder anorganischen porösen Wärmedämmung (5) umgibt, die ein Strukturelement zum Abstützen der Metallwände (30, 31) gegenüber dem in dem Innenraum (7) herrschenden Unterdruck definiert.

**10.** Teil nach einem der Ansprüche 7 bis 9, wobei es zumindest einen Abschnitt eines Gehäuses zur Aufnahme eines Fluids mit einer Temperatur definiert, die entweder zwischen -50°C und 15°C oder zwischen 50°C und 300°C schwankt.

**11.** Wärmespeicher für einen Schiffs- oder Kraftfahrzeug-Antriebsmotor, wobei der Wärmespeicher das Teil nach einem der Ansprüche 8 bis 10 enthält.

**12.** Flugzeugtriebwerksgondel mit einer festen inneren Struktur (17), die mit mehreren wärmeisolierenden Teilen (1) nach einem der Ansprüche 8 bis 9 versehen ist, wobei die wärmeisolierenden Teile zusammengefügt sind und jeweils eine gekrümmte Form aufweisen.

**Claims**

**1.** A method for producing a thermally insulating part having a thermal conductivity less than 100 mW/m.K, at 20°C and in an environment at atmospheric pressure, and further having inner and outer walls (300, 310), respectively, the method comprising the following steps:

- using at least one first and one second metal plates (30, 31),
- hollow-forming the first metal plate (30) to constitute at least one portion of the inner wall of the produced part or of a blank thereof,
- hollow-forming the second metal plate (31) to constitute at least one portion of the outer wall of the produced part or of a blank thereof,

**characterised in that** the method also comprises steps:

- wherein the hollow-forming of the first metal plate is internally at least locally concave to constitute at least one portion of said inner wall,
- wherein the hollow-forming of the second metal plate is externally at least locally convex to constitute at least one portion of said outer wall,
- wherein the cavity of the first metal plate is placed inside the cavity of the second plate, thus defining together a double-walled bowl,
- wherein, during said formings, the shapes of the first and second metal plates are adjusted such that they can be placed in contact with one another, peripherally, while leaving a space there between, inside said periphery, and
- then wherein, the first and second metal plates, which each have a thickness less than 3 mm, are placed in a chamber (65) having a low pressure that is lower than the ambient pressure, thus lower than $10^5$ Pa and/or filled with a gas having a thermal conductivity lower than that of air, thus lower than 26 mW/m.K, in which chamber the first and second metal plates are welded together, peripherally, with a continuous weld, so that is created between them, inside said space, an enclosure (7) having a low pressure that is lower than the ambient pressure, thus lower than $10^5$ Pa, and/or which is filled with a gas having a thermal conductivity lower than that of the ambient air, thus lower than 26 mW/m.K.

**2.** Method for producing a structure:

- wherein a plurality of said thermally insulating parts are produced, each part being made as the double-walled bowl according to the method of claim 1, and,
- wherein, once the parts (1) are sealed, at least two such sealed parts are assembled together, arranging them with the hollow-formings of the first an second metal plates facing one another to produce the structure, which comprises an inner space (12, 13), between the double walls.

**3.** Method according to one of the preceding claims, wherein before welding the first and second metal plates (30, 31) together in the chamber (65), a thermally insulating core material (5) is interposed therebetween.

**4.** Method according to claim 3 wherein before welding the inner and outer walls together, the hollow core material (5) is moulded, substantially to the shapes of the inner and outer walls of the first and second metal plates (30, 31), to be placed inside one another, respectively.

**5.** Method according to claim 4, wherein the core material (5) is moulded before being disposed between the first and second metal plates (30,31).

**6.** Method according to one of the preceding claims, wherein during said step of using, first and second metal plates (30, 31) with thickness from 0.07 mm to 3 mm are used, chosen from the group comprising stainless steel, aluminium and other metals with thermal conductivity of less than 300 W/m.K.

**7.** A thermal insulating part (1) comprising an airtight casing defining an inner enclosure (7) with low pressure relative to the outside environment, the inner enclosure (7) being then at a pressure lower than the ambient pressure, thus lower than $10^5$ Pa, or being filled with a gas having a thermal conductivity lower than that of air, thus lower than 26 mW/m.K, the part having a thermal conductivity of less than 100 mW/m.K, at 20°C and in an environment at atmospheric pressure, the airtight casing comprising inner and outer metal walls (30, 31), respectively, sealed together peripherally (6) to maintain the inner enclosure at said pressure lower than the ambient pressure, thus lower than $10^5$ Pa or filled with a gas having a thermal conductivity lower than that of air, thus lower than 26 mW/m, each of said inner and outer metal walls having a thickness of less than 3 mm, **characterised in that**:

- said seal is a continuous weld, and
- the inner and outer metal walls (30, 31), respectively, are both globally hollow-formed and arranged with one cavity inside the other, thus jointly defining a bowl (12) with double wall (30, 31).

**8.** Part according to claim 7, wherein the metal walls are surrounded by an attachment flange (35) which comprises a mechanically reinforced structure, such as a frame:

- located at least locally around the seal between the metal walls,
- and which receives, around said seal, means for linking with a structure to which the part is added in order to be attached,
the attachment flange having an increased material thickness compared with the thickness(es) of the metal walls, in order to define the mechanically reinforced structure and/or the seal (6) between the metal walls.

**9.** Part according to one of the claims 7 or 8, wherein the airtight casing (3) surrounds a core material comprising an organic or inorganic porous thermal insulator (5) defining a structuring element for supporting the metal walls (30, 31) against the low pressure inside the inner enclosure (7).

**10.** Part according to one of the claims 7 to 9, which defines at least one portion of a sump for receiving a fluid at a temperature ranging either from -50°C to 15°C or from 50°C to 300°C.

**11.** A heat store for a propelling motor vehicle or naval engine, the heat store comprising the part according to one of the claims 8 to 10.

**12.** An aircraft engine nacelle comprising an inner fixed structure (17) provided with a plurality of said thermal part insulating parts (1) according to one of the claims 8 to 9, the thermal insulating parts being assembled together and each having a curved shape.

FIG.1

FIG.2

FIG.3

FIG.4

FIG.5

FIG.6

FIG.7

EXT

EXT

FIG.8

FIG.9

FIG.10

FIG.11

FIG.12

FIG.13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9157230 B
- EP 2345770 A1
- JP 2006275186 A
- WO 2009087172 A2
- EP 0717949 A1
- FR 2996850 A
- FR 29966856